# EUROPÄISCHE PATENTSCHRIFT

(11) **EP 2 081 807 B1**
(45) Veröffentlichungstag und Bekanntmachung des Hinweises auf die Patenterteilung: **17.05.2017**
(21) Anmeldenummer: 07802866.9
(22) Anmeldetag: 24.08.2007
(51) Int. Cl.: B60L 11/14, B60K 6/48, B60W 10/02, B60W 10/06, B60W 10/08, B60W 20/00

(54) **VERFAHREN FÜR DIE STEUERUNG EINES HYBRIDANTRIEBS**
METHOD FOR CONTROLLING A HYBRID DRIVE
PROCEDE DE COMMANDE D'UN ENTRAINEMENT HYBRIDE

(30) Priorität: 23.10.2006 DE 102006049888
(43) Veröffentlichungstag der Anmeldung: 29.07.2009
(73) Patentinhaber: Robert Bosch GmbH, 70442 Stuttgart (DE)
(72) Erfinder: SCHENK, Rene, 71732 Tamm (DE); KAEFER, Oliver, 71711 Murr (DE); JUENEMANN, Thorsten, 71069 Sindelfingen (DE)
(86) Internationale Anmeldenummer: PCT/EP2007/058817
(87) Internationale Veröffentlichungsnummer: WO 2008/049662

(56) Entgegenhaltungen:
- EP-A- 1 052 135
- EP-A- 1 785 305
- DE-A1- 10 161 900
- DE-A1- 10 316 422
- US-A- 5 697 466
- US-A- 5 842 534
- US-A1- 2003 065 433

## Beschreibung

### Stand der Technik

Die Erfindung betrifft ein Verfahren für die Steuerung eines Hybridantriebs eines Fahrzeugs nach dem Oberbegriff des Anspruchs 1. Der gattungsgemäße Hybridantrieb umfasst mindestens eine Verbrennungsmotor, mindestens eine elektrische Maschine und mindestens je eine Kupplung zwischen der Verbrennungsmotor und der elektrischen Maschine sowie zwischen der elektrischen Maschine und dem anschließenden Antriebsstrang des Fahrzeugs. Im Rahmen der Weiterentwicklung bestehender Antriebskonzepte im Automobilbereich hinsichtlich der Verbrauchsoptimierung, der Emissionsreduktion und der Verbesserung des subjektiven Fahrempfindens gewinnen Hybridantriebe zunehmend an Bedeutung. Diese besitzen neben dem Verbrennungsmotor noch mindestens eine weitere Antriebsquelle, welche nicht mit fossilen Brennstoffen betrieben wird. Durch eine geeignete Betriebsstrategie können die Vorteile der unterschiedlichen Antriebsquellen optimal ausgenutzt und Nachteile ausgeglichen werden. Die Kombination eines Verbrennungsmotors mit elektrischen Maschinen als alternative Antriebsquellen ist dabei die dominante Variante innerhalb des Automobilsektors. Eine Reihe von unterschiedlichen Hybrid-Fahrzeugen ist als Serien- oder seriennahe Konstruktionen bereits ausgeführt. Allen ist gemeinsam, dass sie gegenüber konventionell verbrennungsmotorisch angetriebenen Fahrzeugen weniger Kraftstoff verbrauchen. Die Verbrauchseinsparung ist auf die hybridspezifischen Möglichkeiten der Rekuperation von Energie beim Bremsen sowie auf die Realisierung von Start-Stopp-Funktionen zurückzuführen. Beim Hybridantrieb unterscheidet man zwischen Parallel-, Seriell- und Split-Hybrid. Allen gemeinsam ist die Verwendung zweier Energiespeicher, einer Batterie und einem Kraftstofftank. Als Alternative zur Batterie sind auch Kondensatoren als Energiespeicher denkbar. Ein weiteres Unterscheidungsmerkmal bei Hybridantrieben ist die Leistungsfähigkeit der elektrischen Maschinen. Man trennt dabei zwischen Mild- und Full-Hybrid-Varianten, wobei unter einem so genannten Full-Hybrid ein Fahrzeug zu verstehen ist, das zumindest teilweise in der Lage ist, mit rein elektrischem Antrieb zu fahren. So genannte leistungsverzweigende Hybridantriebe bleiben für die vorliegende Erfindung außer Betracht, da dort der Startvorgang anders abläuft und sich daher das der Erfindung zugrunde liegende Problem nicht stellt. Weiter bekannt sind so genannte Startergeneratoren. Da bei diesen jedoch die elektrische Maschine fest mit der Kurbelwelle des Fahrzeugs verbunden ist, stellt sich das Problem der Synchronisation im Betrieb

Die Druckschrift (DE10316422) wird als nächstliegender Stand der Technik angesehen und offenbart die Merkmale der Präambel des unabhängigen Anspruchs 1.

### Offenbarung der Erfindung

### Technische Aufgabe

Der Erfindung liegt die Aufgabe zugrunde, den Startvorgang bei einem Fahrzeug mit als Parallelhybrid ausgegestaltetem Hybridantrieb zu verbessern.

### Technische Lösung

Diese Aufgabe wird durch die in Anspruch 1 genannten Merkmale gelöst.

### Vorteilhafte Wirkungen

Die Erfindung ermöglicht eine Verbesserung des Startvorgangs bei einem Fahrzeug, das mit einem als Parallelhybrid ausgestalteten Hybridantrieb ausgestattet ist. Dabei ist zwischen dem Verbrennungsmotor und einer elektrischen Maschine eine als Proportionalkupplung ausgebildete zusätzliche Kupplung vorgesehen. Eine derartige Konfiguration erlaubt den Antrieb des Fahrzeugs mit der elektrischen Maschine im geöffneten Zustand dieser zusätzlichen Kupplung. Das Problem dabei ist, dass bei höherem Leistungsbedarf oder abnehmendem Ladezustand der Batterie der Verbrennungsmotor gestartet werden muss, ohne Störungen in dem Antriebsstrang hervorzurufen. Das Starten des Verbrennungsmotors wird durch Schließen dieser zusätzlichen Kupplung erreicht. Dabei muss diese Kupplung jedoch so gesteuert werden, dass einerseits das Drehmoment ausreicht, um den Verbrennungsmotor auf eine für einen erfolgreichen Start erforderliche Drehzahl zu bringen. Andererseits soll das für die Beschleunigung des Verbrennungsmotors verwendete Drehmoment möglichst niedrig sein, da es von der elektrischen Maschine zusätzlich aufgebracht und als Reserve vorgehalten werden muss. Die Erfindung ermöglicht eine komfortablere Steuerung des Hybridantriebs, indem bei einem Start des Verbrennungsmotors auf den Wunsch des Fahrers Rücksicht genommen wird.

Weitere Vorteile ergeben sich aus der Beschreibung, der Zeichnung und den Unteransprüchen.

### Kurze Beschreibung der Zeichnungen

Ausführungsformen der Erfindung werden nachfolgend unter Bezug auf die Zeichnung näher erläutert. Dabei zeigt:
- Figur 1: in schematischer Darstellung ein Fahrzeug mit Hybridantrieb;
- Figur 2: die Zuordnung des Wegs des Fahrpedals zu einer Klasse des Fahrerwunschs;
- Figur 3: die Zuordnung des Wegs des Fahrpedals zu einer Klasse des Fahrerwunschs;
- Figur 4: die Zuordnung des Wegs des Fahrpedals zu einer Klasse des Fahrerwunschs.

### Ausführungsformen der Erfindung

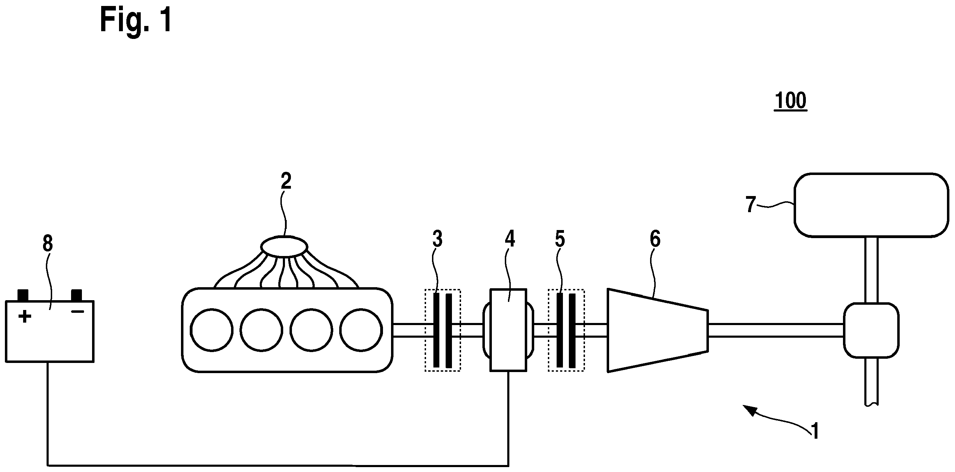

Ausführungsformen der Erfindung werden im Folgenden unter Bezug auf die Zeichnung näher erläutert. Figur 1 zeigt, in einer schematischen Darstellung, ein Fahrzeug 100 mit einem Hybridantrieb 1. Der Hybridantrieb 1 umfasst einen herkömmlichen Verbrennungsmotor 2 und eine elektrische Maschine 4. Zwischen der elektrischen Maschine 4 und dem schematisch dargestellten, mit Bezugsziffer 6 bezeichneten Antriebsstrang ist eine erste Kupplung 5 angeordnet. Zwischen dem Verbrennungsmotor 2 und der elektrischen Maschine 4 ist eine zweite Kupplung 3 angeordnet. Hierbei handelt es sich um eine Proportionalkupplung. Das Fahrwerk des Fahrzeugs 100 ist durch ein Rad 7 und einen Teil einer Achse mit Differential angedeutet. Mit Bezugsziffer 8 ist eine Batterie bezeichnet, die die elektrische Maschine 4 mit Energie versorgt. Weitere Komponenten des Bordnetzes sind in Figur 1 nicht dargestellt. Der in Figur 1 dargestellte Hybridantrieb 1 ermöglicht einen rein elektrischen Antrieb des Fahrzeugs 100 mit der elektrischen Maschine 4. Dabei ist die zwischen der Brennkraftmaschine 2 und der elektrischen Maschine 4 angeordnete zweite Kupplung 3 geöffnet. Wenn nun aber der Ladezustand der Batterie 8 zu stark absinkt oder aber ein höherer Leistungsbedarf erforderlich ist, muss der Verbrennungsmotor 2 gestartet werden. Dies wird durch ein Schließen der zweiten Kupplung 3 ermöglicht. Dies sollte jedoch möglichst keine Störungen in dem Antriebsstrang 6 des Fahrzeugs 100 verursachen. Dazu wird zunächst die Kupplung 5 mit einem Schlupfmoment beaufschlagt. Störungen, die sich infolge des Starts des Verbrennungsmotors 2 auf Seiten der elektrischen Maschine 4 ergeben könnten, können daher von dem Antriebsstrang 6 des Fahrzeugs 100 entkoppelt werden. Weiterhin wird die Kupplung 3 auf ein definiertes Schlupfmoment gesteuert. Mit diesem Moment wird der Verbrennungsmotor 2 beschleunigt, bis er die gleiche Drehzahl wie die elektrische Maschine 4 erreicht hat. Dann wird die Kupplung 3 vollständig geschlossen und der Verbrennungsmotor 2 kann ein Drehmoment auf den Antriebstrang 6 des Fahrzeugs 1 übertragen. Das zusätzliche Moment während der Schlupfphase, im Folgenden auch Schlupfmoment genannt, muss durch die elektrische Maschine 4 bereitgestellt werden. Die Kupplung 3 muss dabei so gesteuert werden, dass einerseits das durch sie auf die Verbrennungsmotor 2 übertragene Drehmoment ausreicht, um den Verbrennungsmotor 2 auf die für einen erfolgreichen Start erforderliche Drehzahl zu bringen. Andererseits soll das für die Beschleunigung des Verbrennungsmotors 2 erforderliche Drehmoment möglichst niedrig sein, da es von der elektrischen Maschine 4 zusätzlich aufgebracht werden und daher als Reserve vorgehalten werden muss. Am Schluss wird auch die Kupplung 5 wieder geschlossen. Das Schließen dieser Kupplung ist jedoch von dem jeweiligen Betriebspunkt abhängig. So kann beispielsweise bei einer niedrigen Drehzahl die Kupplung 5 überhaupt nicht völlig geschlossen werden.

Bei dem zuvor beschriebenen Ablauf gibt es mehrere Ansätze für eine Verbesserung des Startkomforts. Allerdings haben diese auch meistens den Nachteil, dass bei deren Umsetzung die Startdauer verlängert wird. Die Erfindung sorgt nun dafür, dass ein Start des Verbrennungsmotors an den Fahrerwunsch und/oder die Fahrsituation angepasst wird, so dass sich immer ein optimaler Kompromiss ergibt.

Der Kern der Erfindung besteht in einer Klassifizierung und Priorisierung des Fahrerwunsches und/oder der Fahrsituation. Bei der im Folgenden beschriebenen Ausführungsform ist beispielhaft eine Klassifizierung in drei Klassen vorgesehen.

Klasse 1 deckt einen Start ohne besonderen Momentenwunsch ab, der beispielsweise durch das Bordnetz des Fahrzeugs 100 ausgelöst wird. Dieser Fall tritt beispielsweise auf, wenn der Ladungszustand der Batterie zu stark absinkt. Bei dieser Startsituation ist der aktuelle Momentenwunsch im Wesentlichen durch die elektrische Maschine bedingt.

Klasse 2 betrifft einen Startvorgang verbunden mit einem mäßigen Momentenwunsch. Dabei wird ein deutlich höheres Moment gefordert als die elektrische Maschine 4 liefern kann.

Klasse 3 betrifft einen Startvorgang verbunden mit einem sehr hohen Momentenwunsch.

Der Ablauf des Startvorgangs wird für die genannten Klassen mit einem unterschiedlichen Optimierungsgrad festgelegt. Für einen Start ohne besonderen Momentenwunsch gemäß Klasse 1 besteht in der Regel keine besondere Eile. Alle Parameter können somit auf maximalen Komfort ausgelegt werden.

Bei einem Startvorgang mit sehr hohem Momentenwunsch gemäß Klasse 3 soll in der Regel eine möglichst kurze Reaktionszeit realisiert werden. Wenn durch den Startvorgang ein kleiner Ruck in dem Antriebsstrang des Fahrzeugs 100 entsteht, ist das somit nicht besonders kritisch, da durch den hohen Momentenwunsch ohnehin ein vergleichsweise starker Ruck in dem Antriebstrang 6 des Fahrzeugs hervorgerufen wird.

Für den Startvorgang mit mäßigem Momentenwunsch gemäß Klasse 2 kann eine mittlere Applikation gewählt werden. Das heißt, ein nicht zu langsamer Ablauf kann mit einem zufrieden stellenden Komfort verbunden werden.

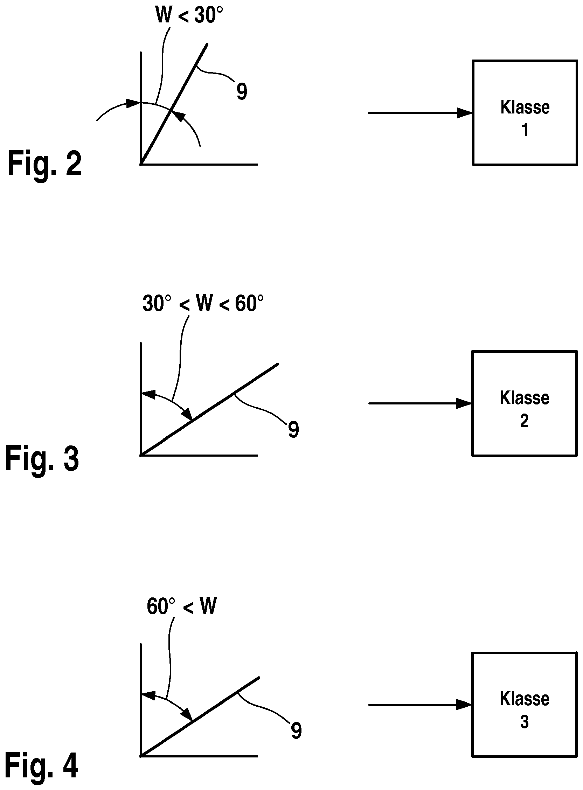

Um die gewünschte Startart und die entsprechende Klasseneinteilung gemäß der vorstehend erwähnten Klassifizierung vorzunehmen, kann, gemäß einer ersten Ausführungsvariante der Erfindung, die Stellung des Fahrpedals herangezogen werden. Zweckmäßig wird dabei ein Schwellwert einer Winkelstellung des Fahrpedals 9, bzw. einem Prozentsatz des maximalen Wegs des Fahrpedals 9, zugeordnet. Ein Startvorgang gemäß Klasse 1 wird dabei beispielsweise eingeleitet, wenn die Stellung des Fahrpedals 9 einem Wert W < 30% des möglichen Pedalwegs entspricht (Figur 2). Ein Startvorgang gemäß Klasse 2 wird dabei beispielsweise eingeleitet, wenn die Stellung des Fahrpedals 9 einem Wert W zwischen 30% und 60% des möglichen Pedalwegs entspricht (Figur 3). Ein Startvorgang gemäß Klasse 3 oben wird eingeleitet, wenn der Weg des Fahrpedals 9 einem Wert W größer als etwa 60% des maximalen Pedalwegs beträgt (Figur 4).

Gemäß der beanspruchten Ausführungsvariante der Erfindung kann die genannte Klasseneinteilung auch unter Berücksichtigung der Betätigungsgeschwindigkeit des Fahrpedals 9 vorgenommen werden. Eine große Änderungsgeschwindigkeit der Fahrpedalbewegung lässt auf einen hohen zukünftigen Momentenwunsch schließen, so dass ein Startvorgang gemäß Klasse 3 eingeleitet wird. Entsprechend führt eine langsamere Änderungsgeschwindigkeit zu einem Startvorgang gemäß Klasse 2, da ein geringerer Momentenwunsch angenommen wird.

Weiterhin ist auch eine Kombination von Fahrpedalstellung und Änderungsgeschwindigkeit der Fahrpedalposition denkbar.

Gemäß der beanspruchten Ausführungsvariante der Erfindung kann auch der Typ des Fahrers erkannt und der erkannte Fahrertyp (sportlich, gemütlich) für die genannte Klassifikation herangezogen werden. Den Typ des Fahrers kann ein Fahrerassistenzsystem beispielsweise aus der Art der Betätigung von Fahrpedal, Bremspedal und Lenkung ableiten. Wenn die genannten Bedienungselemente häufig besonders dynamisch betätigt werden, wird ein besonders sportlicher Fahrer unterstellt.

Weiterhin können Schwellwerte von dem gewählten Schaltprogramm eines Automatgetriebes (zum Beispiel Sport oder Komfort) abhängig gemacht werden.

Dabei hat generell bei Anwendung mehrer Auswahlkriterien die Erkennung einer Startklasse mit einem höheren Momentenwunsch Vorrang gegenüber einer Startklasse mit einem niedrigeren Momentenwunsch.

Im Folgenden werden die von der gewählten Klasse abhängigen Auswirkungen auf die Steuerung des Hybridantriebs beschrieben. Zunächst wird ein Antriebstrang mit Drehmomentwandler betrachtet. Zweckmäßig wird hier die Öffungsgeschwindigkeit der Wandlerüberbrückungskupplung von der gewählten Klassifizierung und der damit vorgesehenen Startart abhängig gemacht. Bei Klasse 1 ist eine niedrige Öffnungsgeschwindigkeit vorgesehen. Dies hat den Nachteil, dass der Vorgang länger dauert, jedoch den Vorteil, dass sich kaum Störungen auf den Antriebstrang 6 des Fahrzeugs 100 auswirken. Bei Klasse 3 dagegen ist die Öffnungsgeschwindigkeit der Wanderüberbrückungskopplung hoch, wobei allerdings Störungen des Antriebstrangs 6 in Kauf genommen werden müssen.

Sofern, wie in dem vorliegenden Ausführungsbeispiel, die Kupplung K3 als Proportionalkupplung ausgebildet ist, kann vorteilhaft das Schlupfmoment, mit dem der Verbrennungsmotor 2 des Hybridantriebs 1 bei einem Start beschleunigt wird, von der gewählten Klasse abhängig sein. So wird bei Klasse 1 das Schlupfmoment gerade so groß wie nötig gewählt. Bei Klasse 3 dagegen wird ein möglichst hohes Schlupfmoment vorgesehen, um eine minimale Startzeit des Verbrennungsmotors 2 zu erreichen.

Auch für das Schließen der Wandlerüberbrückungskupplung nach dem Start können sowohl die Schließgeschwindigkeit als auch die Schließdauer in Abhängigkeit von der Klasse gewählt werden. Dabei ist nicht zwingend die gleiche Klasse wie bei dem Öffnungsvorgang handeln, da der Fahrerwunsch sich in der Zwischenzeit geändert haben kann. Im Interesse einer hohen Flexibilität kann ein Wechsel der Klasse jederzeit durch Änderung des Fahrerwunsches erfolgen.

Während des Starts wird die elektrische Maschine 4 in einem drehzahlgeregelten Modus betrieben. Sobald der Verbrennungsmotor 2 auf die Drehzahl der elektrischen Maschine 4 beschleunigt worden ist, und selbst schon ein Drehmoment liefert, kann es leicht zu einem Überschwingen der Drehzahl kommen, da unter Umständen der Verbrennungsmotor 2 zu Beginn ein zu hohes Drehmoment erzeugt. Es ist daher zweckmäßig, die Drehzahlregelung noch für einige Zeit nach dem Start weiterlaufen zu lassen, um den Überschwinger zu dämpfen. Auch diese Nachlaufzeit der Drehzahlregelung kann vorteilhaft von der Klasseneinteilung abhängig gemacht werden. Im Fall der Klasse 1 kann eine vergleichsweise lange Nachlaufzeit mit einer guten Dämpfung der Überschwinger gewählt werden. Im Fall der Klasse 3 kann eine kurze Nachlaufzeit verbunden mit einer schnellen Reaktion gewählt werden.

Normalerweise wird bei dem Start des Verbrennungsmotors 2 die Drosselklappe geschlossen, damit kein Überschwingen der Drehzahl infolge eines großen Moments auftritt. Wenn allerdings, wie im Fall der Klasse 3, der Wunsch nach einem großen Moment besteht, soll der Verbrennungsmotor 2 möglichst schnell ein möglichst hohes Drehmoment liefern. Auch diesbezüglich bietet es sich also an, in Abhängigkeit von der gewählten Klasse, die Drosselklappe schon zu Beginn des Starts entsprechend zu steuern.

## Patentansprüche

1. Verfahren für die Steuerung eines einen Verbrennungsmotor (2), eine elektrische Maschine (4) und einen Drehmomentwandler Hybridantriebs (1) eines Fahrzeugs (100), mit einer ersten, zwischen der elektrischen Maschine (4) und dem Antriebstrang (6) des Fahrzeugs (100) angeordneten Kupplung (5) und einer zweiten, zwischen der elektrischen Maschine (4) und dem Verbrennungsmotor (2) angeordneten Kupplung (3), wobei Betriebsparameter des Hybridantriebs (1) in Abhängigkeit von dem Fahrerwunsch gesteuert werden und der Fahrerwunsch in drei Klassen (Klasse 1, Klasse 2, Klasse 3) eingeteilt wird, wobei die Klassen sich durch die dem Fahrerwunsch zugeordnete Momentenanforderung unterscheiden, **dadurch gekennzeichnet, dass** die Klasseneinteilung unter Berücksichtigung der Betätigungsgeschwindigkeit eines Fahrpedals (9) sowie nach Typ des Fahrers (sportlich, gemütlich) vorgenommen wird und bei einer als Proportionalkupplung ausgestalteten Kupplung (3) bei Klasse 1 bei einem durch das Bordnetz des Fahrzeugs (100) ausgelösten, auf maximalen komfort ausgelegten Start des Verbrennungsmotors (2) das Kupplungsschlupfmoment so gering wie zum Start des Verbrennungsmotors nötig und bei Klasse 3 bei einem Start des Verbrennungsmotors (2) mit einer dem Fahrerwunsch zugeordneten sehr hohen Momentenanforderung zur Erzielung einer möglichst kurzen Startzeit das Kupplungsmoment auf einen Wert deutlich größer als das zum Start des Verbrennungsmotors (2) erforderliche Kupplungsmoment eingestellt wird.

2. Verfahren nach Anspruch 1, **dadurch gekennzeichnet, dass** der Fahrerwunsch von der Stellung des Fahrpedals (9) abgeleitet wird.

3. Verfahren nach einem der vorhergehenden Ansprüche, **dadurch gekennzeichnet, dass** eine Stellung des Fahrpedals (9) bis 30% der Maximalstellung der Klasse 1, eine Stellung des Fahrpedals (9) zwischen 30 und 60% der Klasse 2, und eine Stellung des Fahrpedals (9) von größer als 60% der Maximalstellung der Klasse 3 entspricht.

4. Verfahren nach einem der vorhergehenden Ansprüche, **dadurch gekennzeichnet, dass** beim Hybridantrieb (1) mit dem Drehmomentwandler die zwischen der elektrischen Maschine (4) und dem Antriebsstrang (6) des Fahrzeugs (100) angeordnete Kupplung (5) eine Wandlerüberbrückungskupplung ist, die bei Klasse 1 mit geringer Öffnungsgeschwindigkeit, bei Klasse 3 mit größtmöglicher Geschwindigkeit geöffnet wird.

5. Verfahren nach einem der vorhergehenden Ansprüche, **dadurch gekennzeichnet, dass** bei einer drehzahlgeregelten elektrischen Maschine (4) bei Klasse 1 eine vergleichsweise lange Zeit für eine Drehzahlregelung nach dem Start der elektrischen Maschine (4) und bei Klasse 3 eine vergleichsweise kurze Zeit vorgesehen ist.

6. Verfahren nach einem der vorhergehenden Ansprüche, **dadurch gekennzeichnet, dass** die Drosselklappe des Fahrzeugs in Abhängigkeit von der Klasse vorgesteuert wird.

## Claims

1. Method for controlling a hybrid drive (1) of a vehicle (100), an internal combustion engine (2), an electric machine (4) and a torque converter, having a first clutch (5) which is arranged between the electric machine (4) and the drive train (6) of the vehicle (100), and a second clutch (3) which is arranged between the electric machine (4) and the internal combustion engine (2), wherein operating parameters of the hybrid drive (1) are controlled as a function of the driver's request, and the driver's request is divided into three classes (class 1, class 2, class 3), wherein the classes differ in the torque request assigned to the driver's request, **characterized in that** the division into classes is performed taking into account the actuation speed of an accelerator pedal (9) and according to the type of the driver (sporty, relaxed), and in the case of a start of the internal combustion engine (2) which is configured for maximum comfort and is triggered by the on-board power system of the vehicle (100) with a clutch (3) configured as a proportional clutch in class 1, the clutch slipping torque set to be as low as is necessary at the start of the internal combustion engine, and in the case of a start of the internal combustion engine (2) in class 3 with a very high torque request assigned to the driver's request the clutch torque is set, in order to achieve a shortest possible starting time, to a value which is significantly higher than the clutch torque which is required to start the internal combustion engine (2).

2. Method according to Claim 1, **characterized in that** the driver's request is derived from the position of the accelerator pedal (9).

3. Method according to one of the preceding claims, **characterized in that** a position of the accelerator pedal (9) up to 30% corresponds to the maximum position of class 1, a position of the accelerator pedal (9) between 30 and 60% corresponds to class 2, and a position of the accelerator pedal (9) which is higher than 60% of the maximum position corresponds to class 3.

4. Method according to one of the preceding claims, **characterized in that** in the hybrid drive (1) with the torque converter the clutch (5) which is arranged between the electric machine (4) and the drive train (6) of the vehicle (100) is a converter lockup clutch which is opened with a low opening speed in class 1, and with the highest possible speed in class 3.

5. Method according to one of the preceding claims, **characterized in that** in a rotational-speed-controlled electric machine (4) a comparatively long time is provided for rotational speed control after the start of the electric machine (4) in class 1, and a comparatively short time is provided in class 3.

6. Method according to one of the preceding claims, **characterized in that** the throttle valve of the vehicle is pre-controlled as a function of the class.

## Revendications

1. Procédé de commande d'un groupe propulseur hybride (1) d'un véhicule automobile (100) un moteur à combustion interne (2), une machine électrique (4) et un convertisseur de couple, pourvu d'un premier embrayage (5) disposé entre la machine électrique (4) et la chaîne cinématique (6) du véhicule automobile (100), et pourvu d'un deuxième embrayage (3) disposé entre la machine électrique (4) et le moteur à combustion interne (2), les paramètres de fonctionnement du groupe propulseur hybride (1) étant commandés en fonction du souhait du conducteur et le souhait du conducteur étant divisé en trois classes (Classe 1, Classe 2, Classe 3), les classes se différenciant par l'exigence de couple associée au souhait du conducteur, **caractérisé en ce que** la division en classes est effectuée en tenant compte de la vitesse d'actionnement d'une pédale d'accélérateur (9) ainsi que du type de conducteur (sportif, tranquille) et, avec un embrayage (3) réalisé sous la forme d'un embrayage proportionnel, en Classe 1, en présence d'un démarrage du moteur à combustion interne (2) déclenché par le réseau de bord du véhicule automobile (100) et conçu pour un confort maximal, le couple de patinage d'embrayage est réglé aussi faible que nécessaire pour le démarrage du moteur à combustion interne et, en Classe 3, en présence d'un démarrage du moteur à combustion interne (2) avec une exigence de couple très élevée associée au souhait du conducteur, en vue d'obtenir un temps de démarrage le plus court possible, le couple d'embrayage est réglé à une valeur nettement plus élevée que celle du couple d'embrayage nécessaire pour le démarrage du moteur à combustion interne (2).

2. Procédé selon la revendication 1, **caractérisé en ce que** le souhait du conducteur est dérivé de la position de la pédale d'accélérateur (9).

3. Procédé selon l'une des revendications précédentes, **caractérisé en ce qu'**une position de la pédale d'accélérateur (9) jusqu'à 30 % de la position maximale correspond à la Classe 1, une position de la pédale d'accélérateur (9) entre 30 et 60 % correspond à la Classe 2 et une position de la pédale d'accélérateur (9) au-dessus de 60 % de la position maximale correspond à la Classe 3.

4. Procédé selon l'une des revendications précédentes, **caractérisé en ce qu'**avec le groupe propulseur hybride (1) pourvu du convertisseur de couple, l'embrayage (5) disposé entre la machine électrique (4) et la chaîne cinématique (6) du véhicule automobile (100) est un embrayage de pontage de convertisseur qui, en Classe 1, est ouvert avec une faible vitesse d'ouverture et, en Classe 3, avec la vitesse la plus élevée possible.

5. Procédé selon l'une des revendications précédentes, **caractérisé en ce qu'**avec une machine électrique (4) à régulation de vitesse, en Classe 1, un temps relativement long est prévu pour une régulation de la vitesse après un démarrage de la machine électrique (4) et, en Classe 3, un temps relativement court.

6. Procédé selon l'une des revendications précédentes, **caractérisé en ce que** le papillon des gaz du véhicule est précommandé en fonction de la classe.
